# EUROPÄISCHE PATENTANMELDUNG

(11) **EP 2 273 044 A2**
(43) Veröffentlichungstag der Anmeldung: **12.01.2011**
(21) Anmeldenummer: 10168667.3
(22) Anmeldetag: 07.07.2010
(51) Int. Cl.: E05C 9/00

(54) **Verbindungselemente für einen Stulp**

(30) Priorität: 08.07.2009 AT 4202009 U
(71) Anmelder: ROTO FRANK AG, 70771 Leinfelden-Echterdingen (DE)
(72) Erfinder: Schmidt, Andreas, 8591, Gößnitz (AT)
(74) Vertreter: Müllner, Martin

(57) **Zusammenfassung**

Verbindungselemente zum Verbinden zweier Teile (42, 42') eines Stulps. Um eine einfache Verlängerung eines Stulps (42) zu ermöglichen, ist vorgesehen, dass ein Verbinder (15) im Wesentlichen einen U-förmigen Querschnitt aufweist und mit zwei den Steg (29) durchsetzenden Bohrungen (32, 36) versehen ist, von denen eine zur Aufnahme eines Dübels vorgesehen ist, der einen Kopf (38) und in dem von diesem abgekehrten freien Ende eines Schaftes (39) eine im Wesentlichen kegelstumpfförmige Verdickung (40) aufweist, deren Basis dem Kopf (38) zugekehrt ist, wobei der Schaft (39) mindestens mit einem an dessen freier Stirnseite offenen Schlitz (41) versehen ist und der Abstand zwischen der Unterseite des Kopfes (38) und der Basis der Verdickung (40) dem Abstand zwischen der Oberseite des Stulps (42) und der Unterseite des Steges (29) im montierten Zustand des Verbinders (15) entspricht.

## Beschreibung

### Technisches Gebiet

Die Erfindung betrifft Verbindungselemente zum Verbinden zweier Teile eines Stulps.

### Stand der Technik

Bisher erfolgten derartige Verbindungen mittels Schrauben, die Bohrungen in den stumpf aneinander stoßenden Teilen des Stulps durchsetzen und über Abstandhalter in den Rahmen z.B. eines Fensterflügels eingreifen. Dabei wurden meist volle Abstandhalter vorgesehen.

Bei einer solchen Lösung ergibt sich das Problem, dass bei den Verarbeitern (Türen- bzw. Fensterherstellern) idR nur mit einer Handbohrmaschine gebohrt werden kann und dabei auch der Abstandhalter gehalten werden muss. Es sind dazu zwei Personen notwendig. Um ein Vorstehen der Schraubenköpfe zu vermeiden, muss das Loch des Verlängerungsteils für die Schraube angesenkt werden, weil dieses nach Ablängen des Verlängerungsteils hergestellt wird. Dies wird von den Verarbeitern (Türen- bzw. Fensterherstellern) aus Kostengründen (zusätzlicher Arbeitsschritt) als nachteilig angesehen. Der andere Teil des Stulps kann bereits werkseitig vorgebohrt und angesenkt sein. Das Ansenken eines Lochs mit einer Handbohrmaschine bereitet jedoch erhebliche Schwierigkeiten. Das Loch kann zwar einfach gleichzeitig mit dem Ablängen durch Stanzen hergestellt werden, doch ist es mit den bei den Verarbeitern vorhandenen Mitteln (Handstanzen) nicht möglich, auch eine Ansenkung beim Stanzen herzustellen.

### Darstellung der Erfindung

Technische Aufgabe

Ziel der Erfindung ist es, diese Nachteile zu vermeiden und Verbindungsmittel vorzuschlagen, die unter den üblichen Bedingungen bei den Verarbeitern eine einfache Verlängerung von Stulpen ermöglichen.

### Technische Lösung

Erfindungsgemäß wird dies durch die kennzeichnenden Merkmale des Anspruchs 1 erreicht.

### Vorteilhafte Wirkungen der Erfindung

Zunächst wird der Verbinder unter den zu verlängernden Stulp geschoben und mit einer in eine vorgefertigte, angesenkte Bohrung dieses Teils des Stulps eingesteckten Schraube fixiert. Durch die vorgeschlagenen Maßnahmen genügt es, den entsprechend in seiner Länge angepassten Verlängerungsteil des Stulps mit einem Loch zu versehen, den Dübel durch dieses zu stecken und den Schaft des Dübels in den vorgeschlagenen Verbinder zu drücken. Nach dem Einschnappen des Dübels, wobei dessen Verdickung den Rand der Bohrung an der Innenseite des Steges übergreift, ist die Verlängerung des Stulps vorläufig fixiert. Nach dem Einsetzen einer weiteren Schraube in den Dübel kann die Verlängerung des Stulps mit dem Rahmen z.B. eines Fensterflügels verbunden werden. Beim Festziehen der in den Dübel eingesetzten Schraube wird der Kopf des Dübels in das Loch gepresst, wodurch sich praktisch gleiche Verhältnisse ergeben wie bei einer angesenkten Bohrung und ein Vorstehen des Kopfes der Schraube weitgehend vermieden wird.

Der Verbinder und der Dübel können aus Kunststoff hergestellt werden, wodurch sich eine einfache und preiswerte Herstellung ergibt.

Um den Verbinder in einer Nut eines Rahmens eines Fensterflügels oder einer Tür provisorisch festhalten zu können, ist es vorteilhaft, die Merkmale des Anspruchs 3 vorzusehen.

Die Merkmale des Anspruchs 4 ermöglichen es auf einfache Weise, Platz für eine Treibstange freizulassen. Dabei ist es lediglich erforderlich, in der Treibstange einen dem Ansatz entsprechenden Durchbruch anzuordnen. Nach dem Einstecken des Ansatzes des Verbinders in einen solchen Durchbruch kann der Verbinder durch teilweises Einstecken des Dübels gehalten werden (z.B. während des Transports).

Durch die Merkmale des Anspruchs 5 ergibt sich einerseits eine entsprechende Führung bzw. Sicherung der Lage des Verbinders gegenüber dem Stulp bzw. dessen Verlängerung und gleichzeitig wird Platz für das Einpressen des Kopfes in das Loch der Verlängerung des Stulps beim Festziehen der Schraube geschaffen.

### Kurze Beschreibung der Abbildungen der Zeichnungen

Die Erfindung wird nun anhand der Zeichnungen näher erläutert. Dabei zeigen:

Fig. 1 und 2 Ansichten von hinten eines Beschlags mit erfindungsgemäßen Verbindungselementen;

Fig. 3 eine Ansicht von oben auf den Beschlag nach der Fig. 2;

Fig. 4 eine Darstellung der wesentlichen Teile des Beschlags nach den Fig. 1 bis 3;

Fig. 5 eine Treibstange für einen Beschlag nach einer der Fig. 1 bis 3;

Fig. 6 und 7 ein erfindungsgemäßes Verbindungselement;

Fig. 8 und 9 einen Verbinder zur Verbindung zweier Teile eines Stulps;

Fig. 10 und 11 einen Dübel zur Befestigung des Verbinders nach den Fig. 8 und 9;

Fig. 12 und 13 eine Aufnahme für einen Verbinder; und

Fig. 14 und 15 schematisch die Anwendung des Verbinders.

### Bester Weg zur Ausführung der Erfindung

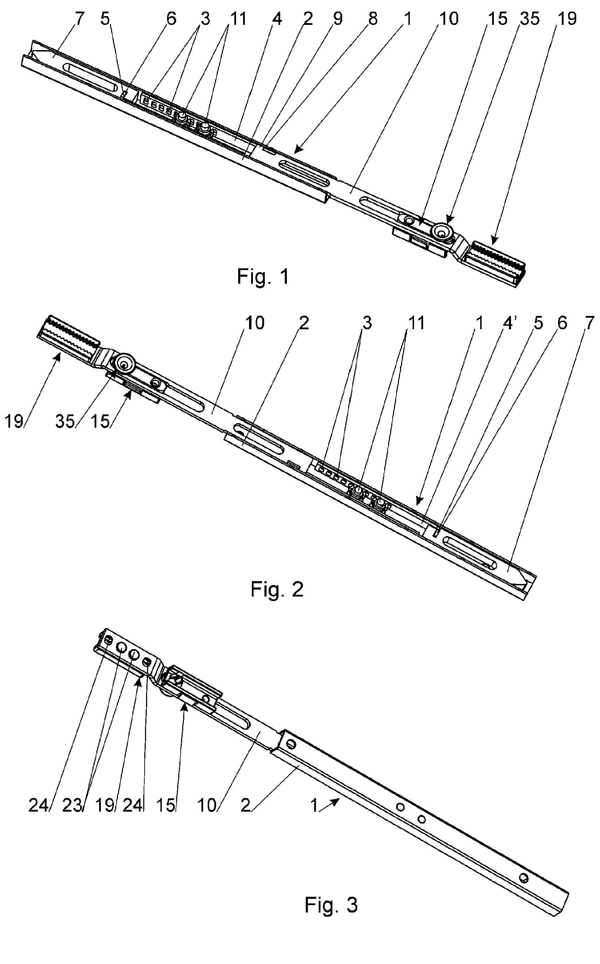

Ein Beschlag gemäß den Fig. 1 bis 3 weist einen U-förmigen Träger 1 auf. An den Innenseiten der Schenkel 2 des Trägers 1 gleiten mit Durchbrüchen 3 versehene Schubstangen 4, 4', die mit Zahnritzeln 11 kämmen, die über eine nicht dargestellte Handhabe betätigbar sind. Dabei verschieben sich die beiden Schubstangen 4, 4' in einander entgegengesetzten Richtungen.

Die Schubstange 4' weist an ihrem einen Ende einen nach innen gerichteten Haken 5 auf, der in eine Nut 6 eines Riegels 7 eingreift. Die Schubstange 4 ist mit einer Ausnehmung 8 versehen, die an einer Längsseite in einem Endbereich angeordnet ist und in die ein Ansatz 9 einer Treibstange 10 eingreift.

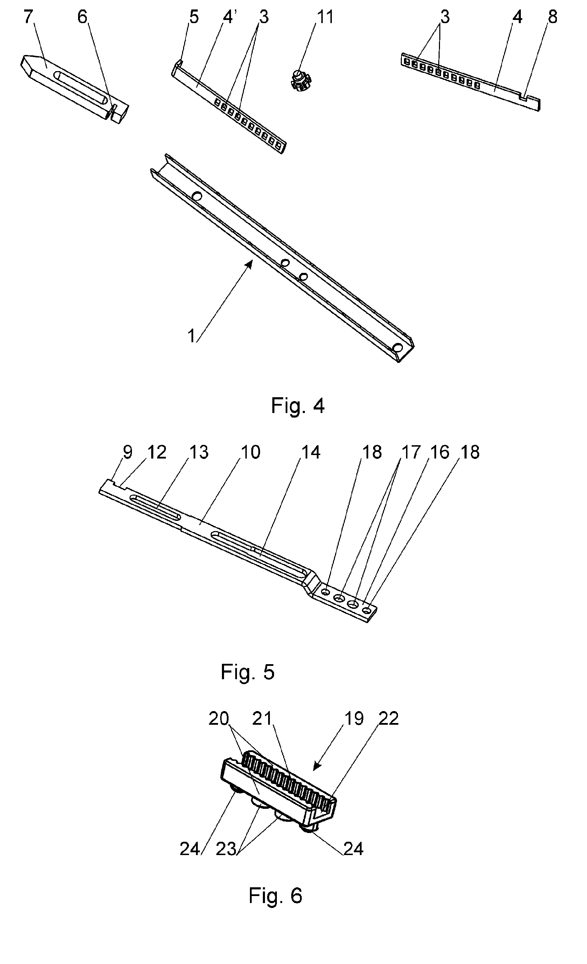

Die Einzelteile des Beschlags nach den Fig. 1 bis 3 sind in den Fig. 4 und 5 dargestellt.

Die Treibstange 10 weist wie erwähnt einen Ansatz 9 auf, der in die Ausnehmung 8 der Schubstange 4 eingreift, wobei die Treibstange 10 eine Freistellung 12 aufweist, die an den Ansatz 9 unmittelbar anschließt und in die der Abschnitt der Schubstange 4 eingreift, der zwischen der Ausnehmung 8 und dem Ende der Schubstange 4 liegt.

Die Treibstange 10 weist Durchbrüche 13, 14 auf, von denen der Durchbruch 14 zur Aufnahme bzw. Vorrats-Halterung eines Verbinders 15 zur Verbindung zweier Teile eines Stulps dient. Weiters weist die Treibstange 10 eine Auskröpfung 16 auf, in deren Bereich zwei mittlere, größere Bohrungen 17 und zwei kleinere Bohrungen 18 vorgesehen sind. Diese dienen zur Befestigung eines Verbindungselementes 19.

Dieses Verbindungselement 19 weist einen U-förmigen Querschnitt auf, wobei die Innenseiten der Schenkel 20 mit Verzahnungen 21 versehen sind. Von der Außenseite des Steges 22 ragen zwei entlang der Mittellinie angeordnete volle Zapfen 23 auf, sowie zwei Befestigungszapfen 24, die einen kleineren Durchmesser aufweisen und mit an deren Stirnseiten randoffenen Schlitzen 25 versehen sind. Weiters weisen die Befestigungszapfen 24 an deren freien Enden Auskragungen 26 auf. Diese übergreifen im in die Bohrungen 18 eingesteckten Zustand die Ränder der Bohrungen 18 der Auskröpfung 16 der Treibstange 10. Beim Einstecken des Verbindungselementes 19 in die Bohrungen 17, 18 werden die Befestigungszapfen 24 federnd etwas zusammengedrückt und kehren nach dem vollständigen Einstecken federnd wieder weitgehend in ihre ursprüngliche Form zurück, wobei die Auskragungen 26 der Befestigungszapfen 24 über die Ränder der Bohrungen 18 greifen und damit das Verbindungselement 19 auch in Richtung senkrecht zur Treibstange 10 fixieren. Zur Übertragung von Schubkräften dienen die Zapfen 23, die in die Bohrungen 17 eingreifen.

Die Verbindungselemente 19 dienen zur Verbindung der Treibstange 10 mit einem weiteren Bauteil, z.B. einem Riegel oder einer Verlängerung der Treibstange 10, der bzw. die einen Ansatz mit einer Außenverzahnung aufweist und daher in unterschiedlichen Lagen zum Verbindungselement 19 in dieses eingesetzt werden kann, wobei die Verzahnungen miteinander kämmen. Dadurch ist auch ein Ausgleich von Toleranzen auf einfache Weise möglich.

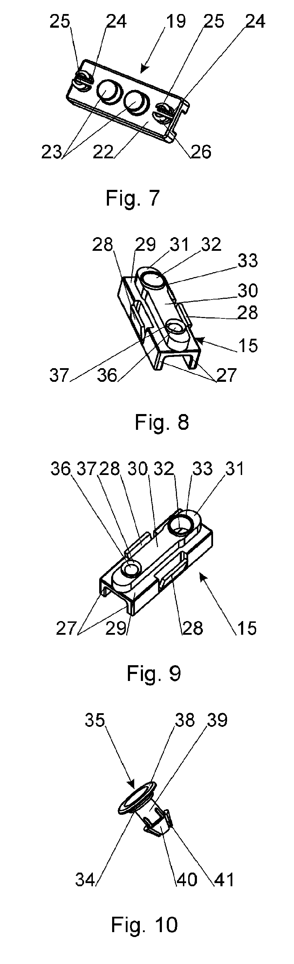

Die Fig. 8 und 9 zeigen einen Verbinder 15, der zur Verbindung zweier Teile eines Stulps 42, 42' dient. Dieser Verbinder 15 ist im Wesentlichen U-förmig ausgebildet. Die Innenseiten seiner Schenkel 27 sind glatt ausgebildet. Im Mittelteil der Schenkel 27 stehen von diesen Zungen 28 ab, die im freien Randbereich der Schenkel 27 mit diesen verbunden sind. Diese Zungen werden beim Einsetzen in eine Nut z.B. eines Rahmens eines Fensterflügels zusammengedrückt und halten den Verbinder 15 in dieser Nut aufgrund der Reibung.

Vom Steg 29 des Verbinders 15 ragt ein länglicher Ansatz 30 nach oben ab. Dieser weist eine Verbreiterung 31 auf. Im Bereich dieser Verbreiterung 31 ist eine Bohrung 32 angeordnet, die einen Kragen 33 aufweist. Im Bereich des Ansatzes 30 ist eine weitere Bohrung 36 mit gegenüber der Bohrung 32 kleinerem Durchmesser vorgesehen. Diese weist einen Kragen 37 auf. Diese Bohrung 36 dient zur Aufnahme einer Schraube. Die beiden Krägen dienen zur Positionierung des Stulps, sodass die Bohrungen 32 und 36 mit der Bohrung 43 bzw. dem Loch 44 fluchten.

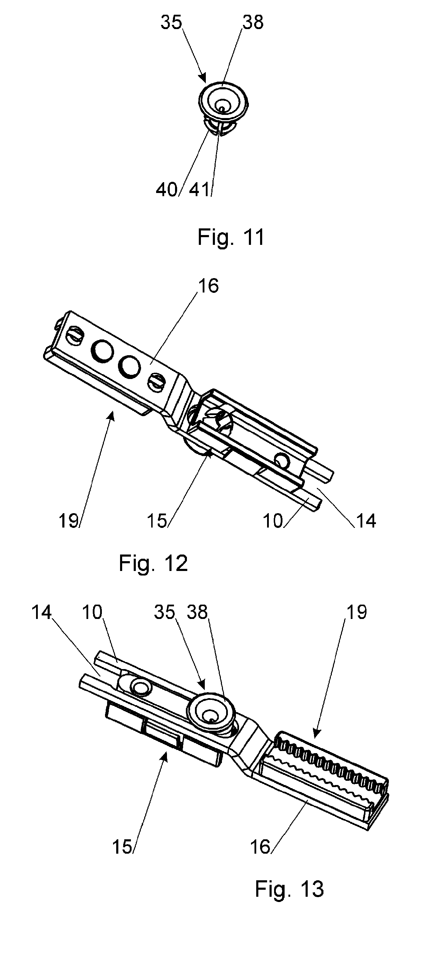

Für die vorläufige Aufnahme des Verbinders 15 ist ein Durchbruch 14 in der Treibstange 10 vorgesehen, in den der Ansatz 30 des Verbinders 15 eingreift. Zur lösbaren Sicherung des Verbinders 15 in dem Durchbruch 14 der Treibstange 10 ist ein Dübel 35 (Fig. 10, 11) vorgesehen, der zu einem Teil seiner Länge in die Bohrung 32 des Verbinders 15 eingesteckt ist und dessen Kopf einen die Breite des Durchbruchs 14 übersteigenden Durchmesser aufweist.

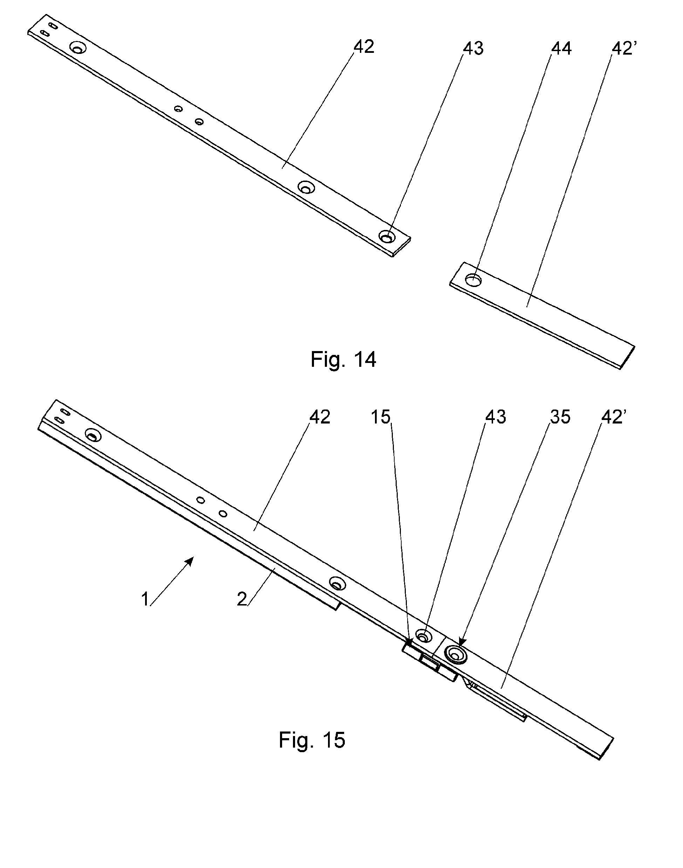

Der Dübel 35 weist unterhalb des Kopfes 38 einen Ansatz 34 auf, dessen Durchmesser kleiner als jener des Kopfes 38, aber größer als jener des Schaftes 39 ist. Der Schaft 39 weist im Bereich seines freien Endes eine kegelstumpfförmige Verdickung 40 auf. Die Basis dieser Verdickung ist dem Kopf 38 zugekehrt. Der Abstand zwischen der Basis der Verdickung 40 und der Unterseite des Kopfes 38 entspricht dabei der Dicke des Stulps 42' plus dem Abstand zwischen der Außenseite des Ansatzes 30 von der Unterseite des Steges 29 (vgl. Fig. 15).

Der Schaft 39 des Dübels 35 ist mit zwei senkrecht zueinander stehenden diagonal verlaufenden Schlitzen 41 versehen, die sich über die Verdickung 40 in den glatten Teil des Schaftes 39 hinein erstrecken. Diese Schlitze 41 ermöglichen beim Einsetzen des Dübels 35 ein Zusammendrücken der Verdickung 40. Nach dem vollständigen Einstecken des Dübels 35 in die Bohrung 32 des Verbinders 15 entspannt sich die Verdickung wieder und greift über die Ränder der Bohrung 32 an der Unterseite des Steges 29 hinaus und hält somit den Stulp 42' am Verbinder 15, wobei der Verbinder 15 zuvor mit dem Stulp 42 verschraubt wurde.

Die Fig. 14 und 15 zeigen schematisch die Verwendung des Verbinders 15 zum Verbinden zweier Teile eines Stulps 42, 42'. Dabei weist der Stulp 42 in seinem einen Endbereich eine mit einer Ansenkung versehene Bohrung 43 auf. Der Durchmesser der Bohrung 43 entspricht dabei zweckmäßigerweise dem Durchmesser der Bohrung 36 des Verbinders 15. Diese Bohrung 43 samt Senkung kann werkseitig hergestellt werden. Der Verlängerungsteil 42' wird mittels einer Stanze auf die erforderliche Länge zugeschnitten, wobei gleichzeitig das Loch 44 gestanzt wird. Eine Ansenkung kann mittels einer kleinen, handbetätigten Stanze jedoch nicht hergestellt werden, dazu reichen die Kräfte nicht aus. Dieses Loch 44 weist einen Durchmesser auf, der im Wesentlichen dem Ansatz 34 des Dübels 35 entspricht. Gleichzeitig wird Raum geschaffen, in den der Kopf 38 des Dübels 35 beim Anziehen einer in den Dübel 35 eingesetzten Schraube eingepresst werden kann. Dadurch ergeben sich nahezu die gleichen Verhältnisse wie bei einer angesenkten Bohrung und es wird ein Vorstehen des Kopfes der Schraube vermieden.

Soll ein Stulp 42 verlängert werden, dann wird zunächst der Verbinder 15 unter den Stulp 42 geschoben und mit einer in die fluchtenden Bohrungen 43 und 36 eingesetzten Schraube fixiert. Danach hält man einfach den weiteren Teil des Stulps 42' hin, setzt den Dübel 35 in das Loch 44 ein und drückt ihn mit seinem Schaft in die Bohrung 32 des Verbinders 15, bis die Verdickung 40 einschnappt und die Basis der Verdickung 40 den Rand der Bohrung 32 an der Innenseite des Steges 29 übergreift. Damit ist der weitere Stulp 42' vorläufig fixiert. Nun wird in den Dübel 35 eine Schraube eingesetzt und angeschraubt, sodass der Stulp 42' zuverlässig fixiert ist. Der gesamte Vorgang kann (infolge der vorläufigen Fixierung) leicht von einer Person ausgeführt werden, und es ist wegen des Dübels 35 nicht notwendig, das Loch 44 mit einer Ansenkung zu versehen.

## Patentansprüche

1. Verbindungselemente zum Verbinden zweier Teile (42, 42') eines Stulps,
**dadurch gekennzeichnet, dass** ein Verbinder (15) im Wesentlichen einen U-förmigen Querschnitt aufweist und mit zwei den Steg (29) durchsetzenden Bohrungen (32, 36) versehen ist, von denen eine zur Aufnahme eines Dübels (35) vorgesehen ist, der einen Kopf (38) und in dem von diesem abgekehrten freien Ende eines Schaftes (39) eine im Wesentlichen kegelstumpfförmige Verdickung (40) aufweist, deren Basis dem Kopf (38) zugekehrt ist, wobei der Schaft (39) mindestens mit einem an dessen freier Stirnseite offenen Schlitz (41) versehen ist und der Abstand zwischen der Unterseite des Kopfes (38) und der Basis der Verdickung (40) dem Abstand zwischen der Oberseite des Stulps (42) und der Unterseite des Steges (29) im montierten Zustand des Verbinders (15) entspricht.

2. Verbindungselemente nach Anspruch 1, **dadurch gekennzeichnet, dass** der Verbinder (15) und der Dübel (35) aus Kunststoff hergestellt sind.

3. Verbindungselemente nach Anspruch 1 oder 2, **dadurch gekennzeichnet, dass** an der Außenseite der Schenkel (27) des Verbinders (15) federnde Zungen (28) seitlich abstehen.

4. Verbindungselemente nach einem der Ansprüche 1 bis 3, **dadurch gekennzeichnet, dass** an der Oberseite des Stegs (29) ein sich im Wesentlichen über die gesamte Länge des Verbinders (15) erstreckender Ansatz (30) absteht, in dem die Bohrungen (32, 36) angeordnet sind.

5. Verbindungselemente nach einem der Ansprüche 1 bis 4, **dadurch gekennzeichnet, dass** die Bohrungen (32, 36) an der Oberseite des Steges bzw. des Ansatzes (30) Krägen (33, 37) aufweisen, deren Außendurchmesser dem Durchmesser der Bohrung (43) des Stulps (42) bzw. des Lochs (44) der Verlängerung des Stulps (42') entsprechen.
